# EUROPEAN PATENT SPECIFICATION

(11) **EP 1 661 738 B1**
(45) Date of publication and mention of the grant of the patent: **23.06.2010**
(21) Application number: 05023102.6
(22) Date of filing: 22.10.2005
(51) Int. Cl.: B60G 9/02

(54) **Steer axle suspension**
Lenkachsenaufhängung
Suspension à essieu directeur

(30) Priority: 27.11.2004 GB 0426099
(43) Date of publication of application: 31.05.2006
(73) Proprietor: AGCO GmbH, 87616 Marktoberdorf (DE)
(72) Inventor: Mayr, Stefan, 82386 Huglfing (DE); Wagner, Walter, 87634 Ebersbach (DE)
(74) Representative: Morrall, Roger

(56) References cited:
- EP-B- 0 445 164
- US-B1- 6 502 840

## Description

This invention relates to an arrangement of a steerable drive axle on an agricultural tractor, where the drive axle is supported on the vehicle chassis by means of a cardan shaft casing running in the vehicle longitudinal centre plane and firmly connected thereto and is guided by means of a control arm.

Such an arrangement of a drive axle is disclosed in EP 0 445 164 B1. The cardan shaft casing comprises a tube one end of which is formed as a ball joint which is guided freely and swivellable in a correspondingly ball-shaped bearing shell of a counter bearing formed in a supporting component of the vehicle chassis. A cardan shaft via which the drive axle can be driven runs within the cardan shaft casing this determines the minimum diameter of the casing. The diameter of the ball joint on the end of the casing is necessarily even larger and the ball shaped shell supported on the chassis has an even larger dimension since it encircles the ball joint. This known arrangement of the drive axle is hence, because of the difficulty of handling such a bulky ball joint support, difficult and expensive to produce as special machines are required for its machining. In addition, longitudinal forces due to braking and acceleration procedures are transmitted undamped to the vehicle chassis as for this special application no suitable ball joints with damping properties are available.

DE 100 11 955 A1 describes a steering axle which is supported on the vehicle chassis via a cardan shaft housing and an articulated joint. The joint contains a resilient element which allows a limited swivel movement of the cardan shaft housing and hence the steering axle in all directions and transmits the damped peak loads to the vehicle chassis. However, the joint is attached spaced from the longitudinal axis above the cardan shaft housing so that this known support of a steering axle takes up considerable space in the vertical direction. This hinders the achieving of the necessary ground clearance. Also, a cardan shaft housed in the cardan shaft housing to drive the steering axle must be variable in length, which requires greater technical complexity.

The object of the invention is to create a support for a steerable drive axle on an agricultural tractor which is simple in construction and has small vertical extension.

This object is achieved in that the cardan shaft casing is swivellably mounted via a cylindrical pivot pin on a swivel housing and the swivel housing is supported on the chassis swivellable about two horizontal cylindrical bearing bolts running transverse to the vehicle longitudinal direction, where between the bearing bolts and the chassis are arranged resilient elements.

This arrangement simulates a spherical bearing so that the drive axle is supported on the chassis in a manner which permits movement in all directions using only cylindrical components.

The resilient elements have the double task of firstly transmitting impacts to the chassis in a damped manner and secondly providing the necessary degree of freedom in the support to be able to absorb movements in the transverse direction applied to the steering axle on spring deflection by the control arms. In this context, it is sensible for the resilient elements to be arranged on the bearing bolts.

Claims 3 and 4 describe advantageous refinements of the invention which in a simple manner adapts the spring curve of the resilient elements to the requirements of a particular installation. The spring curve therefore has zones with two greatly differing gradients (spring characteristics). A first flat area of the spring characteristics in which the resilient elements yield gently on light loading of the chassis so that the bearing bolts are subject to practically no loads. A subsequent steeper gradient allows the resilient elements to be able to damp greater forces and transmit these to the chassis.

An advantageous addition to the invention is that a lever which is moveable with the shaft casing co-operates with an angle sensor attached in a fixed position relative to the chassis to determine the extent of spring deflection of the chassis relative to the shaft casing.

The invention is explained below with reference to drawings. These show:
- Fig. 1: a perspective view of a steering axle with cardan shaft housing and support on the associated vehicle;
- Fig. 2: a section view of the rear part of the cardan shaft housing and the support,
- Fig. 3: a side view of the rear part of the cardan shaft housing with the swivel housing of the support,
- Fig. 4: a section view along line A-A in Fig. 2,
- Fig. 5: a section view along line B-B in Fig. 4, and
- Fig. 6: a perspective view of the support with an angle sensor.

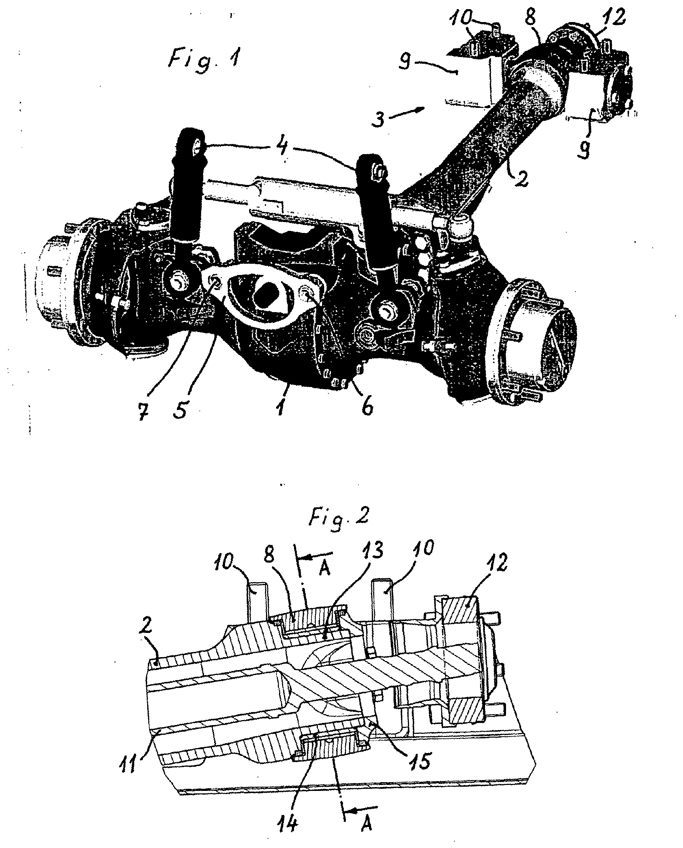

Fig. 1 shows a steerable drive axle view obliquely from the front and above. The drive axle comprises the actual axle body 1 aligned transverse to the longitudinal centre plane of the vehicle chassis not shown, and flanged centrally to the axle body 1 a hollow cardan shaft casing 2, the rear end area of which is mounted in a support 3 attached to the bottom of the chassis. The chassis is sprung in relation to the axle body 1 via two suspension cylinders 4, where forces acting laterally on the axle body 1 are transmitted to the chassis through a horizontal control arm 5. The control arm 5 is articulated to the axle body 1 via the hinge bolt 6 and articulated to the chassis at 7. The support 3 consists of a swivel housing 8 in which is mounted the cardan shaft casing 2, and two bearing blocks 9 arranged at the side of the swivel housing 8 and attached to the chassis by means of bolts 10.

As is evident from Fig. 2, the drive axle is driven by a cardan shaft 11 housed inside the cardan shaft casing 2 which is coupled via a homokinetic joint 12 to a gearbox output shaft not shown. The end area of the cardan shaft casing 2 is formed as a cylindrical pivot pin 13 and mounted swivellable in the thrust bearing 14 of the swivel housing 8 in order to absorb the oscillations of the drive axle. In the axial direction the cardan shaft casing 2 is fixed in the swivel housing 8 via a locking ring 15.

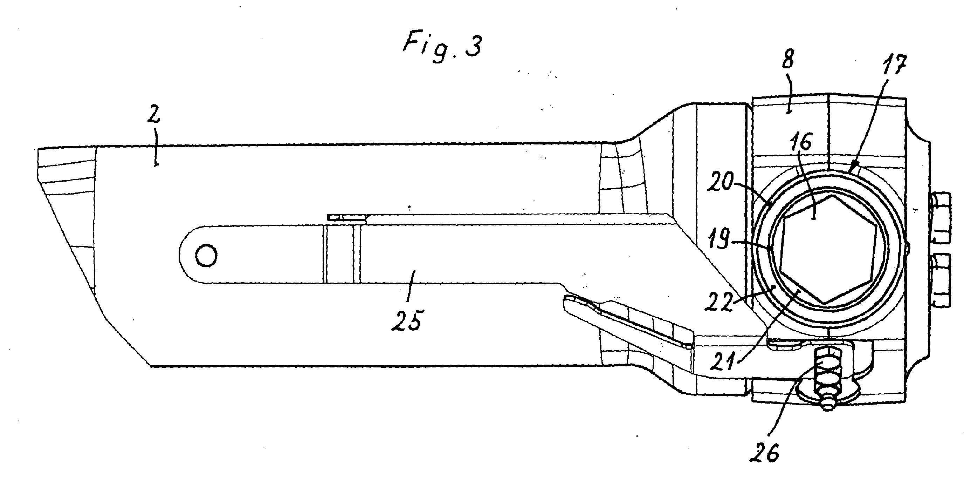

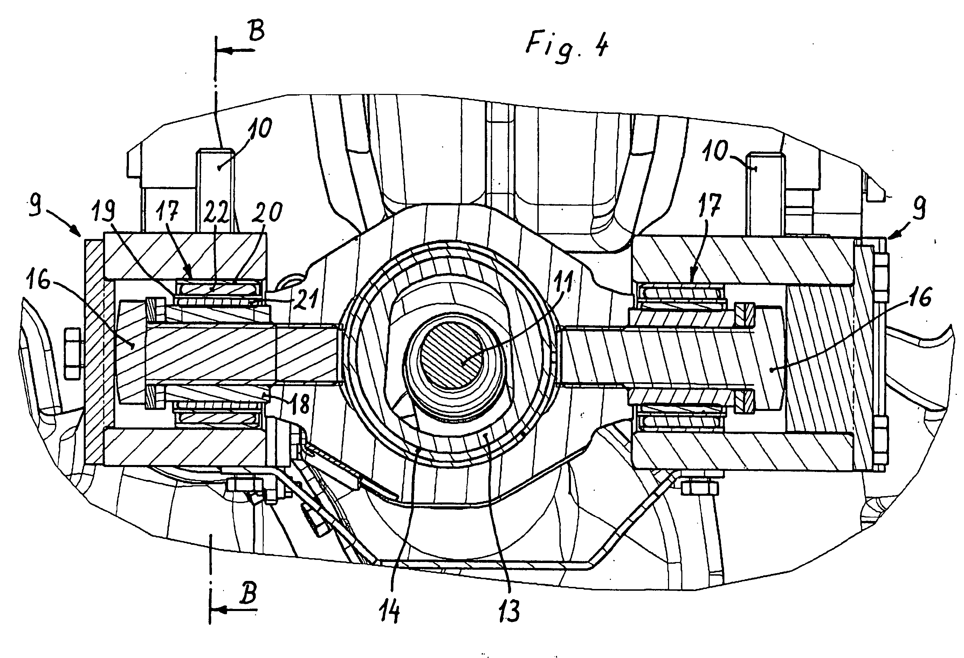

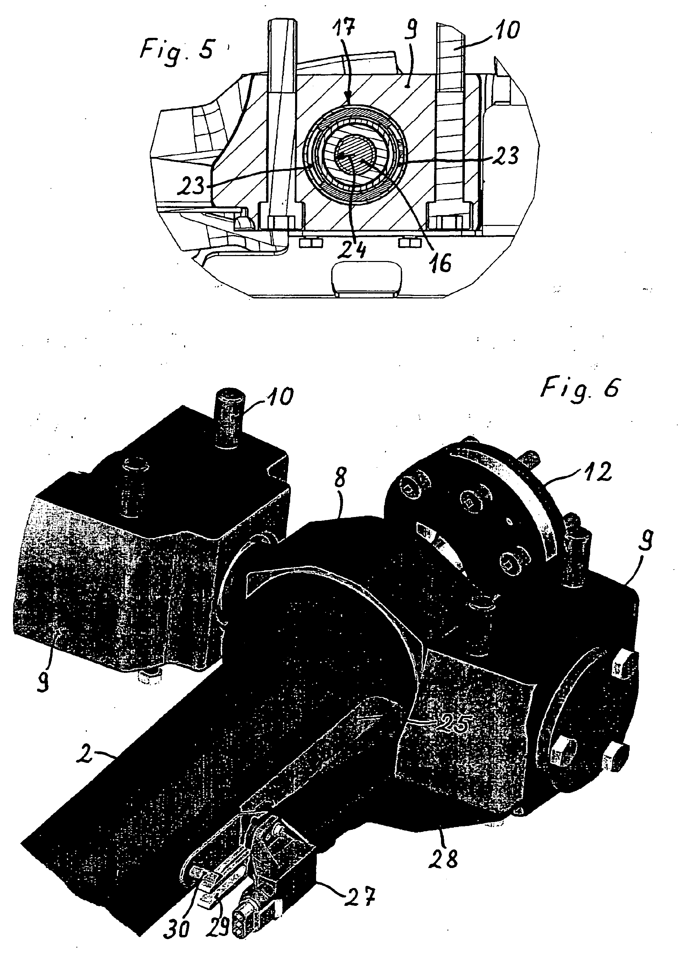

Fig. 3 shows the same area of the cardan shaft casing 8 as Fig. 2 in an external view. The swivel housing 8 can be seen with its bearing shown in more detail in Figs. 4 and 5. The purpose of this is to absorb the swivel movement of the cardan shaft casing 2 on spring deflection of the drive axle. The swivel housing 8 has for this two laterally projecting bearing bolts 16 running transverse to the vehicle longitudinal direction and screwed into the housing wall. The bearing bolts 16 carry resilient elements 17 which are inserted with pretension in a receiver bore of the bearing blocks 9. To enable the resilient elements 17 to absorb the movement applied by the control arm 5 to the axle body 1, cardan shaft casing 2 and bearing bolts 16 on spring deflection of the drive axle and also transmit to the chassis, well-damped, forces acting in the vehicle longitudinal direction resulting from acceleration and braking processes, each resilient element 17 has the following construction.

Resilient element 17 comprises an inner steel ring 18, a middle steel ring 19 and an outer steel ring 20 and between the steel rings layers 21, 22 of resilient material. The inner steel ring 18 is pushed onto the bearing bolt 16 and the outer steel ring 20 rests pretensioned in the receiver bore of the bearing block 9. Whereas the layer 21 of resilient material between the inner 18 and the middle steel ring 19 extends over the entire periphery of the steel rings, the layer 22 of resilient material between the middle 19 and outer steel ring 20 extends merely over a part area of the periphery of the steel rings. Areas 23 each of around 80° peripheral extension remain recessed in the areas in which the bearing bolts 16 move on spring deflection of the drive axle (arrow 24). Thus the resilient element 17 has a two-stage spring characteristic with a first relatively soft area of operation which offers only a slight resistance in opposition to such a movement. If however a greater movement occurs, which is the case if high forces act in the vehicle longitudinal direction as a result of acceleration and braking processes, the middle steel ring 19 comes to lie on the outer steel ring 20. From now on the second stage of the characteristic provided by the completely closed resilient layer 21 between the inner 18 and middle steel rings 19 comes into operation, which is clearly harder so that such great forces can be transferred to the chassis in an adequately damped manner.

The arrangement in accordance with the invention further allows the amount of spring deflection of the chassis relative to the casing 2 to be determined very simply, as required, for example for automatic level adjustment of the chassis. For this chassis deflection measurement, as can be seen from Figs. 3 and 6, on the swivel housing 8 is attached a lever 25 by means of bolts 26 which extend forward next to the cardan shaft casing 2. The lever 25 thus indicates all relative movements of the cardan shaft casing 2 which occur on spring deflection of the chassis, but not however a rotary movement of the cardan shaft casing 2 caused by the oscillation of the drive axle. To determine the position of lever 25 and hence the amount of spring deflection, an angle sensor 27 is used which is attached to a bracket 28 carried via one of the adjacent bearing blocks 9 and the sensor 29 of which co-operates with a peg 30 protruding in the front end area of the lever 25.

## Claims

1. An arrangement of a steerable drive axle on an agricultural tractor, where the drive axle is supported on the vehicle chassis by means of a cardan shaft casing (2) running in the longitudinal vehicle centre plane and firmly connected thereto, and guided by means of a control arm (5), **characterised in that** the cardan shaft casing (2) is mounted swivellable via a cylindrical pivot pin (13) on a swivel housing (8) and the swivel housing (8) is supported on the chassis swivellable about two horizontal cylindrical bearing bolts (16) running transverse to the vehicle longitudinal direction, where between the bearing bolts (16) and the chassis are arranged resilient elements (17).

2. An arrangement according to Claim 1, **characterised in that** the resilient elements (17) are arranged on the bearing bolts (16).

3. An arrangement according to Claim 2, **characterised in that** a resilient element (17) comprises an inner steel ring (18), a middle steel ring (19) and an outer steel ring (20), where between the inner (18) and the middle steel ring (19) is provided a layer (21) of resilient material which extends over the entire periphery of the steel rings (18, 19), and between the middle (19) and the outer steel ring (20) is provided a layer (22) of resilient material which extends only over a part area of the periphery of the steel rings (19, 20), recessed areas (23) being provided in the layer (22) into which the bearing bolts (16) can move on spring deflection of the drive axle.

4. An arrangement according to Claim 3, **characterised in that** two recessed areas (23) are provided in the layer (22), each recessed area extending peripherally for approximately 80°.

5. An arrangement according to Claim 1, **characterised in that** a lever (25) moveable with the swivel housing (8) co-operates with an angle sensor (27) attached in a fixed position relative to the chassis, in order to determine the amount of spring deflection of the chassis relative to the shaft casing (2).

## Patentansprüche

1. Vorrichtung einer lenkbaren Antriebsachse eines landwirtschaftlichen Zugfahrzeugs, insbesondere eines Traktors, wobei die Antriebsachse an oder auf dem Chassis des Fahrzeugs abgestützt ist mittels eines Kardanwellen-Gehäuses (2), welches in der in Längsrichtung des Fahrzeugs orientierten Zentralebene verläuft und fest mit der Antriebsachse verbunden ist, und mittels eines Steuerungs- oder Regelungs-Arms (5) geführt ist, **dadurch gekennzeichnet, dass** das Kardanwellen-Gehäuse (2) über einen zylindrischen Schwenkpin (13) verschwenkbar auf oder an einem Schwenkgehäuse (8) montiert ist und dass das Schwenkgehäuse (8) auf oder an dem Chassis schwenkbar um zwei horizontale zylindrische Lagerbolzen (16) abgestützt ist, die quer zu der Fahrzeuglängsrichtung verlaufen, wobei zwischen den Lagerbolzen (16) und dem Chassis elastische Elemente (17) angeordnet sind.

2. Vorrichtung nach Anspruch 1, **dadurch gekennzeichnet, dass** die elastischen Elemente (17) auf den Lagerbolzen (16) angeordnet sind.

3. Vorrichtung nach Anspruch 2, **dadurch gekennzeichnet, dass** ein elastisches Element (17) einen inneren Stahlring (18), einen mittleren Stahlring (19) und einen äußeren Stahlring (20) besitzt, wobei zwischen dem inneren Stahlring (18) und dem mittleren Stahlring (19) eine Schicht (21) eines elastischen Materials vorgesehen ist, die sich über den gesamten Umfang der Stahlringe (18, 19) erstreckt, zwischen dem mittleren Stahlring (19) und dem äußeren Stahlring (20) eine Schicht (22) eines elastischen Materials vorgesehen ist, die sich lediglich über einen Teilbereich des Umfangs der Stahlringe (19, 20) erstreckt, und mit Ausnehmungen versehene Bereiche (23) in der Schicht (22) vorgesehen sind, in die die Lagerbolzen (16) sich bewegen können mit einer federnden Auslenkung der Antriebsachse.

4. Vorrichtung nach Anspruch 3, **dadurch gekennzeichnet, dass** in der Schicht (22) zwei mit einer Ausnehmung versehene Bereiche (23) vorgesehen sind, wobei sich jeder mit einer Ausnehmung versehene Bereich ungefähr 80° in Umfangsrichtung erstreckt.

5. Vorrichtung nach Anspruch 1, **dadurch gekennzeichnet, dass** ein Hebel (25), der mit dem Schwenkgehäuse (8) bewegbar ist, mit einem Winkelsensor (27) zusammenwirkt, der in einer festen Position relativ zu dem Chassis befestigt ist, um das Ausmaß der federnden Auslenkung des Chassis relativ zu dem Kardanwellen-Gehäuse (2) zu bestimmen.

## Revendications

1. Agencement d'un essieu d'entraînement directeur sur un tracteur agricole, dans lequel l'essieu d'entraînement est supporté sur le châssis de véhicule au moyen d'un carter de transmission à cardan (2) s'étendant dans le plan central longitudinal de véhicule et couplé fermement à celui-ci, et guidé au moyen d'un bras de commande (5), **caractérisé en ce que** le carter de transmission à cardan (2) est monté de manière à pouvoir pivoter par l'intermédiaire d'une broche pivot cylindrique (13) sur un boîtier de pivot (8) et le boîtier de pivot (8) est supporté sur le châssis de manière à pouvoir pivoter autour de deux vis de palier cylindrique horizontales (16) s'étendant transversalement à la direction longitudinale du véhicule, dans lequel entre les vis de palier (16) et le châssis sont agencés des éléments élastiques (17).

2. Agencement selon la revendication 1, **caractérisé en ce que** les éléments élastiques (17) sont agencés sur les vis de palier (16).

3. Agencement selon la revendication 2, **caractérisé en ce qu'**un élément élastique (17) comprend un bague en acier interne (18), une bague en acier centrale (19) et une bague en acier externe (20), dans lequel entre la bague en acier interne (18) et centrale (19) est formée une couche (21) de matériau élastique qui s'étend sur la totalité de la périphérie des bagues en acier (18, 19), et entre la bague en acier centrale (19) et externe (20) est formée une couche (22) de matériau élastique qui s'étend uniquement sur une section partielle de la périphérie des bagues en acier (19, 20), des zones en cavité (23) étant formées sur la couche (22) dans lesquelles les vis de palier (16) peuvent se déplacer lors de la flexion élastique de l'essieu d'entraînement.

4. Agencement selon la revendication 3, **caractérisé en ce que** deux zones en cavité (23) sont formées sur la couche (22), chaque zone en cavité s'étendant en périphérie sur approximativement 80°.

5. Agencement selon la revendication 1, **caractérisé en ce qu'**un levier (25) pouvant se déplacer avec le boîtier articulé (8) coopère avec un capteur d'angle (27) maintenu dans une position fixe par rapport au châssis, dans le but de déterminer le niveau de déflexion élastique du châssis par rapport au carter de transmission (2).
